# EUROPÄISCHE PATENTSCHRIFT

(11) **EP 0 394 752 B1**
(45) Veröffentlichungstag und Bekanntmachung des Hinweises auf die Patenterteilung: **13.01.1993**
(21) Anmeldenummer: 90106902.1
(22) Anmeldetag: 10.04.1990
(51) Int. Cl.: F02B 29/04

(54) **Flüssigkeitsgekühlte Verbrennungskraftmaschine mit Zwischenkühler**
Water-cooled combustion engine with intercooler
Moteur à combustion à refroidissement liquide avec un refroidisseur intermédiaire

(30) Priorität: 27.04.1989 US 343564
(43) Veröffentlichungstag der Anmeldung: 31.10.1990
(73) Patentinhaber: DEERE & COMPANY, Moline, Illinois 61265 (US)
(72) Erfinder: Poore, Bernard Brandt, East Moline, Illinois 61244 (US); Beitel, Howard Virginius, Moline, Illinois 61265 (US); Weinert, Michael Stewart, Bettendorf Iowa 52722 (US)
(74) Vertreter: Feldmann, Bernhard

(56) Entgegenhaltungen:
- US-A- 3 091 228
- US-A- 4 269 158
- US-A- 4 476 842
- US-A- 4 520 627

## Beschreibung

Die Erfindung betrifft eine flüssigkeitsgekühlte Verbrennungskraftmaschine mit einem an einem Zylinderblock befestigten Zylinderkopf, der wenigstens eine Lufteintrittsöffnung für den Eintritt der Kraftmaschinenverbrennungsluft aufweist. Die Lufteintrittsöffnung steht mit einem Ladeluftkühler, oder Zwischenkühler genannt, zur Kühlung der Verbrennungsluft in Verbindung. Der Ladeluftkühler wird wenigstens teilweise von einer kanalförmigen Vertiefung des Zylinderkopfes aufgenommen und durch eine am Zylinderkopf befestigte Abdeckung, die einen Teil der Ladeluftleitung bildet, abgedeckt.

Durch die Verwendung von Abgasturboladern oder Vorverdichtern läßt sich die Ausgangsleistung von Verbrennungskraftmaschinen steigern, indem die von der Maschine angesaugte Luft kompremiert wird. Wird Luft auf diese Weise kompremiert, so erwärmt sie sich. Da kältere Luft bei gleichem Druck eine höhere Dichte aufweist als erwärmte Luft, kann die Luftdichte dadurch gesteigert werden, daß die Luft nach dem Verdichten abgekühlt wird. Für eine maximale Verdichtung wird daher die Luft zuerst durch einen Turbolader oder einen Vorverdichter verdichtet und anschließend abgekühlt, bevor sie in den Einlaßkrümmer der Maschine eingespeist wird. Hierzu wird die Luft über einen Zwischen- oder Ladeluftkühler geleitet, bevor sie der Maschine zugeführt wird.

Es ist schwierig, einen Zwischenkühler und dessen Gehäuse in die Gesamtkonstruktion einer Verbrennungskraftmaschine einzubauen. Normalerweise wird ein derartiger Zwischenkühler lediglich am Äußeren der Verbrennungskraftmaschine befestigt und ist mit diesem über Kühlleitungen und Luftkanäle, die außerhalb der Verbrennungskraftmaschine verlaufen, in einem äußeren Kreis verbunden. Eine derartige Anordnung liefert ein unübersichtliches Erscheinungsbild. Die weitläufigen freiliegenden Kühlleitungen und Luftkanäle verursachen wegen ihrer Reibungsverluste einen relativ schlechten Wirkungsgrad.

Die US-A-3,091,228 beschreibt eine Verbrennungskraftmaschine mit Turbolader und Nachkühler. Auf einem Zylinderblock ist ein Zylinderkopf aufgesetzt, der auf seiner Oberseite eine Abdeckung trägt, durch die die Ventile und Steuerwellen geschützt werden. Neben der Abdeckung ist in eine Ausnehmung des Zylinderkopfes ein Nachkühler teilweise eingesetzt, dessen herausragender Bereich durch eine zweite Abdeckung, die gleichzeitig als mit dem Turbolader verbundener Zuluftkanal ausgebildet ist, abgedeckt ist. Der Nachkühler enthält horizontal verlaufende Kühlmittelrohre, die an seinen beiden Seiten in jeweils einem Sammelkanal enden. An jeden Sammelkanal ist eine Kühlmittelleitung angeschlossen, die nach unten aus dem Zylinderkopf herausführt und als separate Leitung mit einer geeigneten Kühlmittelquelle verbunden ist. Auch hier verlaufen die Kühlmittelleitungen zumindest teilweise außerhalb der Verbrennungskraftmaschine.

Die mit der Erfindung zu lösende Aufgabe wird darin gesehen, bei einer flüssigkeitsgekühlten Verbrennungskraftmaschine mit Zwischenkühler der eingangs genannten Art die Reibungsverluste zu vermindern und eine kompakte Maschinen-Zwischenkühler-Baueinheit mit möglichst wenigen freiliegenden Kühlleitungen und Luftkanälen bereitzustellen.

Die Aufgabe wird bei einer gattungsgemäßen Verbrennungskraftmaschine durch die kennzeichnenden Merkmale des Patentanspruches 1 gelöst.

Einer bevorzugten Ausgestaltung der Erfindung zufolge ragt der Zylinderkopf wenigstens mit einem Bereich über die Außenkontur des Zylinderblockes hinaus. In diesem freitragenden Bereich ist der Ladeluftkühler angeordnet und durch eine an dem Zylinderkopf befestigte Abdeckung abgedeckt. Hierbei weist der Zylinderkopf vorzugsweise eine im wesentlichen ebene Befestigungsfläche auf, die als Verbindungsfläche zwischen dem Zylinderkopf einerseits und dem Zylinderblock sowie der Abdeckung andererseits dient.

Zweckmäßigerweise weist der vorstehende Bereich des Zylinderkopfes eine kanalförmige Vertiefung auf, in die die Lufteintrittsöffnung mündet und die wenigstens einen Teil des Ladeluftkühlers aufnimmt.

Gemäß einer bevorzugten Ausgestaltung der Erfindung enthält der Zylinderkopf wenigstens einen Kühlmittelzuflußdurchgang, wenigstens einen Kühlmittelrückflußdurchgang und wenigstens einen Luftzuführdurchgang. Die Kühlmittelzu- und -rückflußdurchgänge stehen über Leitungen mit den Kühlmittelanschlüssen des Ladeluftkühlers in Verbindung. Ferner ist eine abnehmbare Abdeckung am Zylinderkopf befestigbar, welche den Ladeluftkühler und die Kühlmittelleitungen vollständig einschließt, wobei der Zylinderkopf, die Abdeckung und der Ladeluftkühler so angeordnet sind, daß die Verbrennungsluft von dem Luftzuführdurchgang über den Ladeluftkühler zu der Lufteintrittsöffnung geleitet wird.

Der Zylinderkopf bildet mit dem Zwischenkühler eine Baueinheit, bei der kein äußerer, freiliegender Kühl- und Verteilerkreis vorliegt. Von außen an die Baueinheit sind lediglich die Kühlmittelzu- und -ableitungen und ein von dem Turbolader ausgehender Luftkanal angeschlossen.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

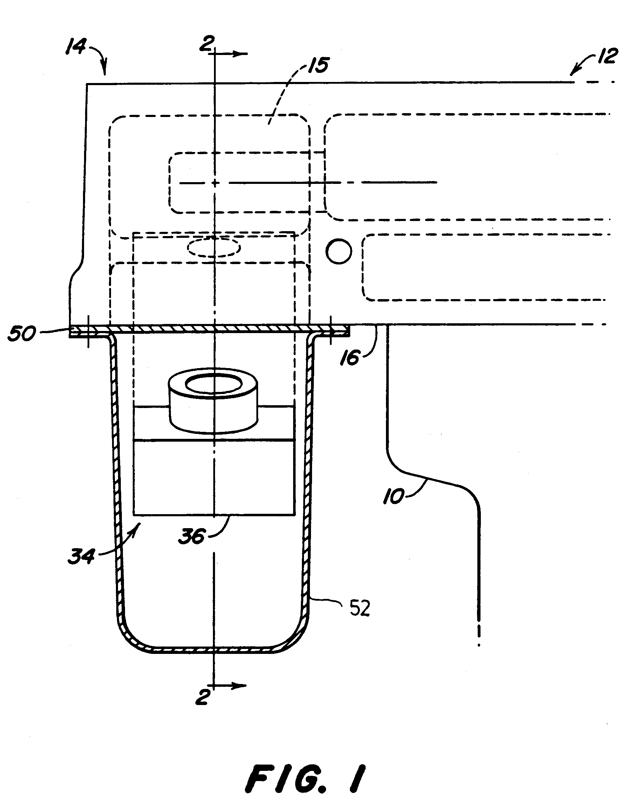

Fig. 1 Einen Ausschnitt der Seitenansicht des Zylinderblockes und des Zylinderkopfes einer Verbrennungskraftmaschine mit den erfindungsgemäßen Merkmalen,

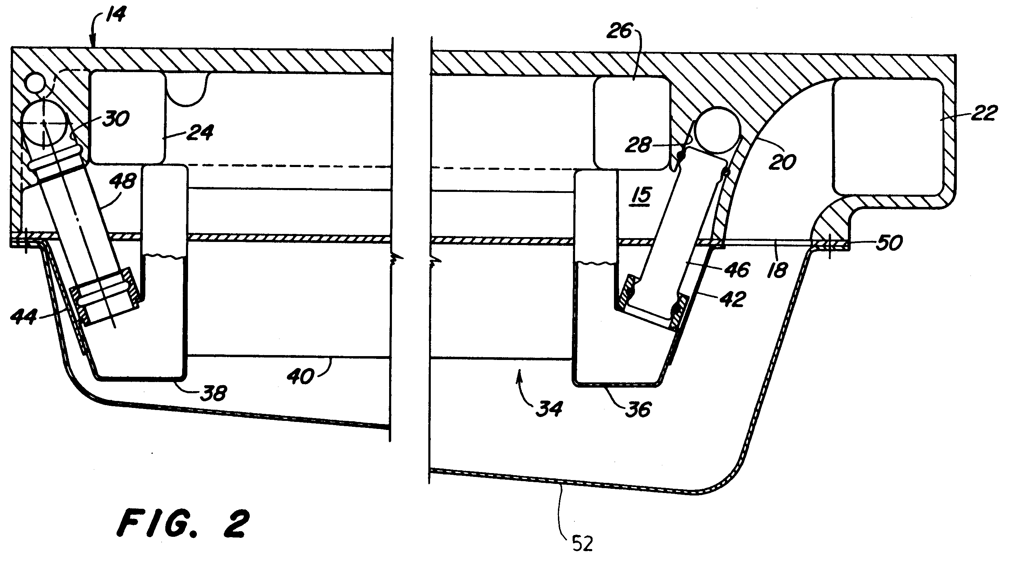

Fig. 2 eine Schnittdarstellung entlang der Linie 2 - 2 gemäß Fig. 1.

Eine Verbrennungskraftmaschine enthält einen Zylinderblock 10 mit mehreren (nicht dargestellten) Zylinderbohrungen. Ein Zylinderkopf 12 ist am oberen Ende des Zylinderblockes 10 durch übliche (nicht dargestellte) Mittel befestigt. Der Zylinderkopf 12 weist eine Verlängerung 14 auf, die seitlich über den Zylinderblock 10 freitragend übersteht. Der Zylinderkopf 12 und die Verlängerung 14 weisen eine im wesentlichen ebene Befestigungsfläche 16 auf, von der ein Teil dichtend mit dem Zylinderblock 10 verbunden ist.

Die Verlängerung 14 weist einen Hohlraum oder Kanal 15 auf, welcher zur Befestigungsfläche 16 hin offen ist.

Der Zylinderkopf 12 weist eine Lufteinlaßöffnung 18 auf, welche über die Durchgänge 20 und 22 verdichtete Luft von einem (nicht dargestellten) Turbolader erhält und sich zu dem Kanal 15 hin öffnet. Der Zylinderkopf 12 weist ferner vordere und hintere Lufteintrittsöffnungen 24 und 26 auf, durch welche Ansaugluft zu den (nicht dargestellten) Zylindern der Verbrennungskraftmaschine geleitet wird. Ein Kühlmittelzuflußdurchgang 28 erstreckt sich durch den Zylinderkopf 12 und öffnet sich in den Kanal 15 in der Nähe der Lufteintrittsöffnung 26. Ein Kühlmittelrückflußdurchgang 30 erstreckt sich ebenfalls durch den Zylinderkopf 12 und öffnet sich in den Kanal 15 in der Nähe der Lufteintrittsöffnung 24. Der Kühlmittelzuflußdurchgang 28 steht mit einer (nicht dargestellten) Kühlmittelquelle und der Kühlmittelrückflußdurchgang 30 steht mit einem (nicht dargestellten) Kühlmittelsammelbehälter in Verbindung.

Ein Zwischenkühler 34 oder Ladeluftkühler wird von dem Kanal 15 teilweise aufgenommen. Er enthält einen Einlaßsammler 36, einen Auslaßsammler 38 und einen Wärmetauscherkern 40, der sich zwischen den Sammlern 36 und 38 erstreckt. Der Zwischenkühler 34 ist an dem Zylinderkopf 12 durch Montageplatten 42 und 44 festgelegt. Ein erstes Rohr oder eine Leitung 46 verbindet den Einlaßsammler 36 mit dem Kühlmittelzuflußdurchgang 28, und die Leitung 48 verbindet den Auslaßsammler 38 mit dem Kühlmittelrückflußdurchgang 30.

Eine Dichtmanschette oder eine Flanschdichtung 50 liegt an dem Bereich der Oberfläche 16 an, der den Kanal 15 umgibt. Eine Abdeckung 52 ist an dem Zylinderkopf 12 derart befestigt, daß sie das untere, offene Ende des Kanals 15 umhüllt und den Zwischenkühler 34, die Lufteinlaßöffnung 18, die Lufteintrittsöffnungen 24 und 26, die Kühlmitteldurchgänge 28 und 30 und die Leitungen 46 und 48 einschließt. Die Abdeckung 52, der Zwischenkühler 34 und der Zylinderkopf 12 sind so angeordnet, daß die vom Turbolader verdichtete Luft von der Lufteinlaßöffnung 18 über den Zwischenkühler 34 zu den Lufteintrittsöffnungen 24 und 26 der Verbrennungskraftmaschine strömt.

## Patentansprüche

1. Flüssigkeitsgekühlte Verbrennungskraftmaschine mit einem an einem Zylinderblock (10) befestigten Zylinderkopf (12), der wenigstens eine Lufteintrittsöffnung (24, 26) für den Eintritt der Kraftmaschinenverbrennungsluft, welche mit einem Ladeluftkühler (34) zur Kühlung der Verbrennungsluft in Verbindung steht, aufweist, wobei der Ladeluftkühler (34) wenigstens teilweise von einer kanalförmigen Vertiefung (15) des Zylinderkopfes (12) aufgenommen wird und durch eine am Zylinderkopf (12) befestigte Abdeckung (52), die einen Teil der Ladeluftleitung bildet, abgedeckt ist, dadurch gekennzeichnet, daß in den Zylinderkopf (12) Kühlmittelleitungen (28, 30) für den Ladeluftkühler (34) integriert sind, die in der Vertiefung (15) münden und durch rohrförmige Leitungen (46, 48) mit Kühlmitteleinlässen (36) bzw. -auslässen (38) des Ladeluftkühlers (34) verbunden sind, und daß die Leitungen (46, 48) vollständig innerhalb der Abdeckung (52) verlaufen.

2. Verbrennungskraftmaschine nach Anspruch 1, dadurch gekennzeichnet, daß der Zylinderkopf (12) mit einem ersten Bereich über dem Zylinderblock (10) angeordnet ist und mit wenigstens einem zweiten Bereich nach außen über den Zylinderblock (10) hinausragt und daß der Ladeluftkühler (34) durch eine am zweiten Bereich befestigte Abdeckung (52) abgedeckt ist.

3. Verbrennungskraftmaschine nach Anspruch 2, dadurch gekennzeichnet, daß der Zylinderkopf (12) eine im wesentlichen ebene Befestigungsfläche (16) aufweist, und daß der Zylinderblock (10) mit einem ersten Abschnitt der Befestigungsfläche (16) und die Abdekkung (52) mit einem zweiten Abschnitt der Befestigungsfläche (16) verbunden ist.

4. Verbrennungskraftmaschine nach Anspruch 2 oder 3, dadurch gekennzeichnet, daß sich die kanalförmige Vertiefung (15) in dem zweiten Bereich des Zylinderkopfes (12) befindet und die wenigstens eine Lufteintrittsöffnung (24, 26) in der Vertiefung (15) mündet.

5. Verbrennungskraftmaschine nach einem der Ansprüche 1 bis 4, dadurch gekennzeichnet, daß die Kühlmittelleitungen (28, 30) des Ladeluftkühlers (34) in der Nähe zweier sich gegenüberliegender Lufteintrittsöffnungen (24, 26) münden.

6. Verbrennungskraftmaschine nach einem der Ansprüche 1 bis 5, dadurch gekennzeichnet, daß der Zylinderkopf (12) wenigstens einen Kühlmittelzuflußdurchgang (28), wenigstens einen Kühlmittelrückflußdurchgang (30) und wenigstens einen Luftzuführdurchgang (20, 22) enthält, daß die Kühlmittelzu- und -rückflußdurchgänge (28, 30) über eine erste und eine zweite Leitung (46, 48) mit Kühlmitteleinlässen (36) bzw. -auslässen (38) des Ladeluftkühlers (34) in Verbindung stehen, und daß eine abnehmbare Abdeckung (52) am Zylinderkopf (12) befestigt ist, welche den Ladeluftkühler (34) und die erste und zweite Leitung (46, 48) vollständig einschließt, wobei der Zylinderkopf (12), die Abdeckung (52) und der Ladeluftkühler (34) so angeordnet sind, daß die Verbrennungsluft von dem Luftzuführdurchgang (20, 22) über den Ladeluftkühler (34) zu der Lufteintrittsöffnung (24, 26) geleitet wird.

## Claims

1. Liquid-cooled internal combustion engine with a cylinder head (12) attached to a cylinder block (10) and comprising at least one air inlet opening (24, 26) for admission of the engine combustion air, which is connected to a boost intercooler (34) for cooling the combustion air, wherein the boost intercooler (34) is received at least partially by a channel-like recess (15) in the cylinder head (12) and covered by a cover (52) attached to the cylinder head (12) and forming part of the boost duct, characterised in that in the cylinder head (12) are integrated coolant pipes (28, 30) for the boost intercooler (34), which open out in the recess (15) and are connected by tubular pipes (46, 48) to coolant inlets (36) and outlets (38) of the boost intercooler (34), and in that the pipes (46, 48) extend completely within the cover (52).

2. Internal combustion engine according to claim 1, characterised in that the cylinder head (12) is arranged with a first region above the cylinder block (10) and with at least one second region projects outwardly beyond the cylinder block (10) and in that the boost intercooler (34) is covered by a cover (52) attached to the second region.

3. Internal combustion engine according to claim 2, characterised in that the cylinder head (12) comprises an essentially planar attachment surface (16), and in that the cylinder block (10) is connected to a first section of the attachment surface (16) and the cover (52) is connected to a second section of the attachment surface (16).

4. Internal combustion engine according to claim 2 or 3, characterised in that the channel-like recess (15) is located in the second region of the cylinder head (12) and the at least one air inlet opening (24, 26) opens out in the recess (15).

5. Internal combustion engine according to any of claims 1 to 4, characterised in that the coolant pipes (28, 30) of the boost intercooler (34) open out in the vicinity of two opposed air inlet openings (24, 26).

6. Internal combustion engine according to any of claims 1 to 5, characterised in that the cylinder head (12) contains at least one coolant supply passage (28), at least one coolant return passage (30) and at least one air supply passage (20, 22), in that the coolant supply and return passages (28, 30) communicate by first and second pipes (46, 48) with coolant inlets (36) and outlets (38) of the boost intercooler (34), and in that a removable cover (52) is attached to the cylinder head (12), which completely encloses the boost intercooler (34) and the first and second pipes (46, 48), wherein the cylinder head (12), the cover (52) and the boost intercooler (34) are arranged in such a way that the combustion air is conducted from the air supply passage (20, 22) via the boost intercooler (34) to the air inlet opening (24, 26).

## Revendications

1. Moteur à combustion à refroidissement liquide, avec une culasse (12) fixée sur un bloc-cylindres (10) et présentant, pour l'entrée de l'air de combustion du moteur, au moins une ouverture d'entrée d'air (24, 26) qui communique avec un refroidisseur d'air de suralimentation (34) afin de refroidir l'air de combustion, le refroidisseur d'air de sur alimentation (34) étant reçu au moins partiellement par un renfoncement en forme de canal (15) de la culasse (12) et étant recouvert par un élément de recouvrement (52), qui est fixé sur la culasse (12) et constitue une partie de la conduite d'air de suralimentation, **caractérisé** en ce que des conduites de réfrigérant (28, 30) pour le refroidisseur d'air de suralimentation (34) sont incorporées dans la culasse (12), elles débouchent dans le renfoncement (15) et sont reliées par des conduites tubulaires (46, 48) à des entrées (36) ou sorties (38) de réfrigérant du refroidisseur d'air de suralimentation (34), et en ce que les conduites (46, 48) s'étendent en totalité à l'intérieur de l'élément de recouvrement (52).

2. Moteur à combustion selon la revendication 1, **caractérisé** en ce qu'une première région de la culasse (12) est disposée au-dessus du bloc-cylindres (10) et au moins une seconde région de la culasse (12) s'étend au-delà du bloc-cylindres (10) vers l'extérieur, et en ce que le refroidisseur d'air de suralimentation (34) est recouvert par un élément de recouvrement (52) fixé sur la seconde région.

3. Moteur à combustion selon la revendication 2, **caractérisé** en ce que la culasse (12) présente une face de fixation (16) sensiblement plane, et en ce que le bloc-cylindres (10) est assemblé à une première partie de la face de fixation (16) et l'élément de recouvrement (52) à une seconde partie de la face de fixation (16).

4. Moteur à combustion selon la revendication 2 ou 3, **caractérisé** en ce que le renfoncement (15) en forme de canal se trouve dans la seconde région de la culasse (12), et au moins une ouverture d'entrée d'air (24, 26) débouche dans le renfoncement (15).

5. Moteur à combustion selon l'une des revendications 1 à 4, **caractérisé** en ce que les conduites de réfrigérant (28, 30) du refroidisseur d'air de suralimentation (34) débouchent à proximité de deux ouvertures d'entrée d'air (24, 26) en vis-à-vis.

6. Moteur à combustion selon l'une des revendications 1 à 5, **caractérisé** en ce que la culasse (12) contient au moins un passage d'apport de réfrigérant (28), au moins un passage de retour de réfrigérant (30) et au moins un passage d'apport d'air (20, 22), en ce que les passages d'apport et de retour de réfrigérant (28, 30) sont respectivement reliés par des première et seconde conduites (46,48) à des entrées (36) ou sorties (38) de réfrigérant du refroidisseur d'air de suralimentation (34), et en ce qu'un élément de recouvrement amovible (52) est fixé sur la culasse (12) et inclut totalement le refroidisseur d'air de suralimentation (34) et les première et seconde conduites (46, 48), la culasse (12), l'élément de recouvrement (52) et le refroidisseur d'air de suralimentation (34) étant disposés de telle sorte que l'air de combustion est dirigé du passage d'apport d'air (20, 22) à l'ouverture d'entrée d'air (24, 26) en passant par le refroidisseur d'air de suralimentation (34).
